# EUROPEAN PATENT APPLICATION

(11) **EP 4 606 531 A1**
(43) Date of publication of application: **27.08.2025**
(21) Application number: 23879806.0
(22) Date of filing: 17.10.2023
(51) Int. Cl.: B25J 5/00, B60P 1/00, B65G 61/00, B65G 67/24, G06Q 10/083

(54) **DELIVERY SYSTEM AND PROGRAM**

(30) Priority: 18.10.2022 JP 2022166913; 17.11.2022 JP 2022184365; 17.11.2022 JP 2022184366; 22.11.2022 JP 2022186682
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/037602
(87) International publication number: WO 2024/085163

(57) **Abstract**

A delivery system includes a self-driving vehicle, a delivery robot, an information processing device, and a moving device. The self-driving vehicle includes a first space and a second space located below the first space, the first space having at least one tier on which packages are loaded with an opening being formed in a part of at least a lowermost tier. The moving device is installed on the lowermost tier of the first space to move a package to the opening. The delivery robot is parked at a predetermined position where the package dropping from the lowermost tier is receivable below the opening in the second space. The information processing device controls the moving device to move the package to the opening to drop the package from the opening, so that the delivery robot receives the dropped package.

## Description

### Technical Field

The present disclosure relates to a delivery system and a program.

### Background Art

Patent Literature 1 describes a vehicle having a self-driving function. Patent Literature 2 describes a delivery robot that delivers a package.

### Citation List

### Patent Literature

Patent Literature 1: Japanese Patent Application Laid-Open (JP-A) No. 2022-035198
Patent Literature 2: JP-A No. 2022-152847

### SUMMARY OF INVENTION

### Technical Problem

In a case in which packages are delivered by a vehicle having a self-driving function, work of unloading the packages from the vehicle and work of delivering the packages to delivery destinations need to be performed by a human, which requires labor costs.

The disclosure has been made in view of the above circumstances, and an object of the disclosure is to solve the aforementioned problem.

### Solution to Problem

According to one aspect of the disclosure, a delivery system is provided. The delivery system includes:
a self-driving vehicle including a first space and a second space located below the first space, the first space having at least one tier on which packages are loaded with an opening being formed in a part of at least a lowermost tier;
a delivery robot for delivering a package to a delivery destination;
an information processing device; and
a moving device installed on the lowermost tier of the first space to move the package to the opening,
in which the delivery robot is parked at a predetermined position where the package dropping from the lowermost tier is receivable below the opening in the second space, and
the information processing device controls the moving device to move the package to the opening to drop the package from the opening so that the delivery robot receives the dropped package.

In the delivery system according to the disclosure, the self-driving vehicle may include a door for releasing the second space to the outside, a lower end of the door being pivotably attached to the self-driving vehicle, and the door may function as a slope for the delivery robot to enter and exit the self-driving vehicle when the door is opened.

The delivery robot may deliver the package, and return to the predetermined position of the second space after delivering the package.

The moving device may include:
a first bar of roll type that moves a package on a floor of the lowermost tier to near the opening; and
a second bar that pushes the package moved to near the opening toward the opening to drop the package from the opening to the second space.

A drive device of the self-driving vehicle may be installed in the second space.

The first bar may be rotatable about a central axis of the first bar as a rotation axis, and a spiral convex portion may be formed along the central axis.

A plate-like portion whose in-plane direction is along an axial direction and a radial direction of the central axis may be formed in a part of the convex portion.

The convex portion may have a height that partially increases.

A portion of a floor surface of the first space through which the plate-like portion passes when the first bar rolls may have a smaller frictional resistance with respect to the package than the other portion.

According to one aspect of the disclosure, a delivery system is provided. The delivery system includes:
a self-driving vehicle including a first space and a second space located below the first space, the first space having at least two tiers on which packages are loaded with an opening being formed in a part of a floor of at least a lowermost tier, and a plurality of opening/closing doors being formed on a floor of a tier other than the lowermost tier;
a delivery robot for delivering a package to a delivery destination;
an information processing device; and
a first moving device installed on the lowermost tier of the first space to move the package to the opening,
in which the delivery robot is parked at a predetermined position where the package dropping from the lowermost tier is receivable below the opening in the second space, and
the information processing device controls each of the opening/closing doors and the first moving device to open the opening/closing door to drop the package from the opening/closing door and move the package to the opening to drop the package from the opening, so that the delivery robot receives the dropped package.

The delivery system may further include a second moving device installed on a tier other than the lowermost tier of the first space to move the package to above the opening/closing door, in which the information processing device further controls the second moving device.

The second moving device may be a first bar of roll type that moves a package on a floor of a tier other than the lowermost tier to above the opening/closing door, and
the opening/closing door may function as a slope that pivots about a hinge to slide the package.

The delivery system includes:
a plurality of delivery robots for delivering packages to delivery destinations;
a first self-driving vehicle in which one or more of the delivery robots are arranged, the first self-driving vehicle moving to near delivery destinations of packages so that the delivery robots on which the packages are loaded get off the first self-driving vehicle near the delivery destinations; and
a second self-driving vehicle including a space for placing delivery robots, a robot moving device for taking in and out the delivery robots to and from the space, a drive device, and an information processing device,
in which the information processing device controls the robot moving device and the drive device to collect a delivery robot that has delivered a package into the space, and take out a delivery robot from the space and hand over the delivery robot to the first self-driving vehicle when the second self-driving vehicle encounters the first self-driving vehicle in which an insufficient number of delivery robots are arranged while traveling.

The information processing device may control the robot moving device and the drive device to take out the delivery robot from the space and hand over the delivery robot to the first self-driving vehicle while the first self-driving vehicle and the second self-driving vehicle are traveling.

The information processing device may control the robot moving device and the drive device such that the second self-driving vehicle receives a delivery robot from the first self-driving vehicle when the second self-driving vehicle encounters the first self-driving vehicle in which an excessive number of delivery robots are arranged while traveling.

The information processing device may control the robot moving device and the drive device such that the second self-driving vehicle receives the delivery robot from the first self-driving vehicle while the second self-driving vehicle is traveling.

According to one aspect of the disclosure, a program for causing a computer to function as the information processing device of any one of the delivery systems described above may be provided.

Note that the above summary of the disclosure does not enumerate all the necessary features of the disclosure. Further, the disclosure may also include subcombinations of these feature groups.

### BRIEF DESCRIPTION OF DRAWINGS

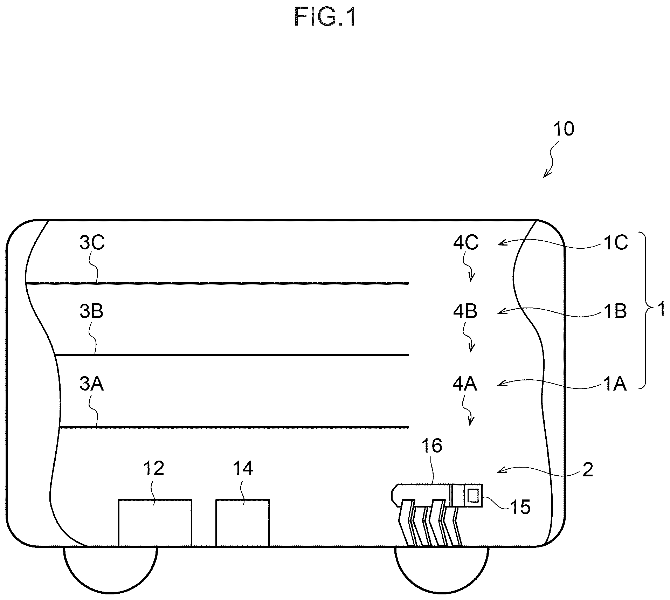

Fig. 1 is a partial cross-sectional side view of a self-driving vehicle used in a delivery system according to the present embodiment.

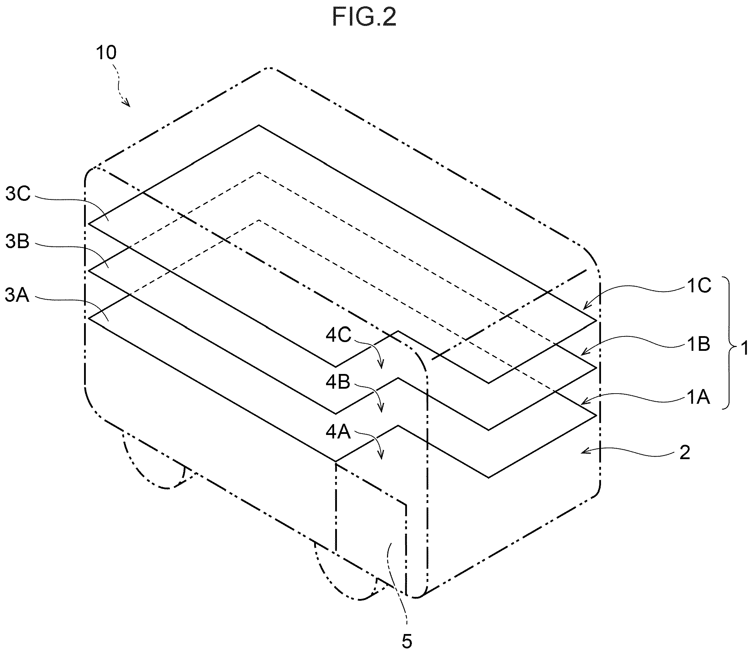

Fig. 2 is a perspective view of the self-driving vehicle used in the delivery system according to the present embodiment.
Fig. 3 is a perspective view illustrating a configuration of a moving device disposed on a lowermost tier.
Fig. 4 is a perspective view illustrating the configuration of the moving device disposed on the lowermost tier.
Fig. 5 is a perspective view of the self-driving vehicle used in the delivery system according to the present embodiment.
Fig. 6 is a diagram schematically illustrating an example of a functional configuration of an information processing device.
Fig. 7 is a diagram schematically illustrating an example of a processing routine executed by the information processing device.
Fig. 8 is a diagram schematically illustrating an example of computer hardware functioning as the information processing device.
Fig. 9A is a partially enlarged perspective view illustrating a concept of a drive device.
Fig. 9B is a partially enlarged perspective view illustrating a concept of a drive device according to a modification.
Fig. 10A is a front view illustrating a modification in which a convex portion is formed in a first bar.
Fig. 10B is a front view illustrating a state in which a package is pressed and moved by the convex portion.
Fig. 11A is a front view illustrating a modification in which a convex portion and a plate-like portion are formed in a first bar.
Fig. 11B is a plan view illustrating a modification in which a convex portion and a plate-like portion are formed on a first bar.
Fig. 12A is a front view illustrating a state in which a package is pressed and moved by the convex portion.
Fig. 12B is a plan view illustrating a state in which a package is pressed and moved by the convex portion.
Fig. 13A is a front view illustrating a state in which a package is pressed and moved by the plate-like portion.
Fig. 13B is a plan view illustrating a state in which a package is pressed and moved by the plate-like portion.
Fig. 14A is a front view illustrating a modification in which another convex portion is formed in a first bar.
Fig. 14B is a cross-sectional view illustrating a modification in which another convex portion is formed in a first bar.
Fig. 15A is a front view illustrating a state in which the height of the convex portion is changed in the first bar.
Fig. 15B is a cross-sectional view illustrating a state in which the height of the convex portion is changed in the first bar.
Fig. 16A is a perspective view illustrating an example in which a moving device and a drive device are provided on a tier other than the lowermost tier.
Fig. 16B is a perspective view illustrating an example in which the position of the opening on the tier other than the lowermost tier is changed.
Fig. 16C is a perspective view illustrating an example in which the position of the opening on the tier other than the lowermost tier is further changed.
Fig. 17A is a perspective view illustrating an example in which an opening/closing door is provided instead of the opening on the tier other than the lowermost tier.
Fig. 17B is a partially enlarged cross-sectional view illustrating a state in which the opening door is opened to form an opening.
Fig. 18A is a partially enlarged cross-sectional view illustrating an example in which a plate-shaped extension member is formed on the opening/closing door.
Fig. 18B is a partially enlarged cross-sectional view illustrating a state in which the extension member has extended.
Fig. 19 is a partially enlarged cross-sectional view illustrating a modification in which an opening door is of sliding type.
Fig. 20 is a partially enlarged cross-sectional view illustrating a modification in which opening doors are formed over substantially an entire surface of a floor.
Fig. 21 is a partial cross-sectional side view of a first self-driving vehicle used in the delivery system according to the present embodiment.
Fig. 22 is a perspective view of a second self-driving vehicle used in the delivery system according to the present embodiment.
Fig. 23 is a diagram schematically illustrating an example of a functional configuration of an information processing device of the second self-driving vehicle.
Fig. 24 is a diagram for explaining a handover of a delivery robot from the second self-driving vehicle to the first self-driving vehicle.
Fig. 25 is a diagram schematically illustrating an example of a processing routine executed by the information processing device of the second self-driving vehicle.
Fig. 26 is a diagram schematically illustrating another example of a functional configuration of an information processing device of the second self-driving vehicle.
Fig. 27 is a diagram for explaining a handover of a delivery robot from the second self-driving vehicle to the first self-driving vehicle.

### DESCRIPTION OF EMBODIMENTS

Hereinafter, the disclosure will be described through embodiments of the disclosure, but the following embodiments do not limit the disclosure according to the claims. In addition, not all combinations of features described in the embodiments are essential to the solution of the disclosure.

### (First Embodiment)

In a delivery system according to the present embodiment, a self-driving vehicle is used. A self-driving vehicle 10 used in the delivery system according to the present embodiment is, for example, a self-driving vehicle at level 6. A conventional non-self-driving vehicle includes a steering wheel, but the self-driving vehicle at level 6 does not require a steering wheel, making it possible to design the space inside the vehicle more spaciously. Level 6 is a self-driving level, and is a level higher than level 5 representing full self-driving. Although level 5 represents full self-driving, it is the same level at which a human is driving, and there is still a probability that an accident or the like will occur. Level 6 is a level higher than level 5, and is a level at which the probability of occurrence of an accident is lower than level 5. Level 6 is realized by, for example, control at a nanosecond level.

The self-driving vehicle 10 according to the present embodiment includes a first space 1 having at least one tier for loading packages and a second space 2 located below the first space 1.

The self-driving vehicle according to the present embodiment has, for example, a total length of 4 m, a height of 1.8 m, and a width of 1.9 m, and a height of the second space 2 of 80 cm, but is not limited thereto.

In the present embodiment, the first space 1 has three tiers 1A, 1B, and 1C, and an opening 4A, an opening 4B, and an opening 4C are formed at one corner of a floor 3A of the tier 1A, at one corner of a floor 3B of the tier 1B, and at one corner of a floor 3C of the tier 1C, respectively. The opening 4A, the opening 4B, and the opening 4C have a size for allowing a package loaded on the self-driving vehicle 10 to pass therethrough. The opening 4C is used to move a package from the tier 1C to the tier 1B, and the opening 4B is used to move a package from the tier 1B to the tier 1A. Note that the first space 1 is not limited to the three tiers, and may have one or two tiers or may have four or more tiers.

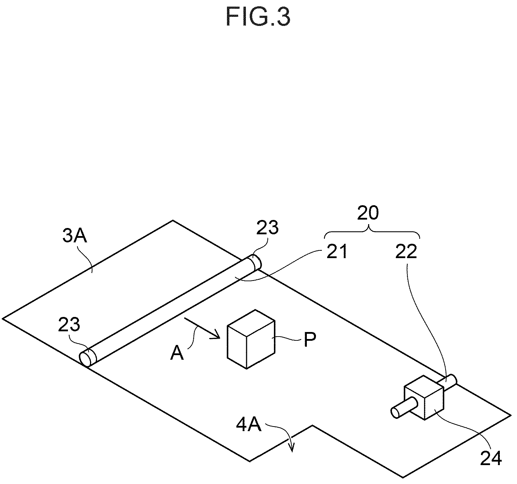

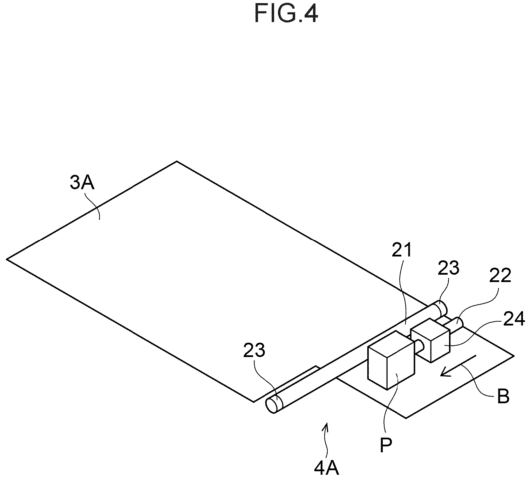

In the lowermost tier 1A of the first space 1, a moving device 20 for moving a package P to the opening 4A is installed. The moving device 20 includes a first bar 21 and a second bar 22. The first bar 21 has a cylindrical shape, extends in a substantially entire width direction of the self-driving vehicle 10, and is disposed on the floor 3A of the lowermost tier 1A. Then, as illustrated in Figs. 3 and 4, when a drive device 23 rolls on the floor 3A of the lowermost tier 1A, the first bar 21 moves in a direction indicated by arrow A, and the package P located on the floor 3A of the lowermost tier 1A moves to near the opening 4A.

The second bar 22 also has a cylindrical shape, and is disposed substantially parallel to the first bar 21 on the floor 3A of the lowermost tier 1A. Then, the second bar 22 is moved back and forth in its long axis direction by a drive device 24, and pushes the package P moved to near the opening 4A in a direction indicated by arrow B toward the opening 4A to drop the package P from the opening 4A into the second space 2.

In the second space 2, a delivery robot 15 for delivering the package P to a delivery destination is parked at a predetermined position. The predetermined position is a position where the package P dropped from the opening 4A can be received. In addition, a drive device 12 for driving the self-driving vehicle 10 and an information processing device 14 are disposed in the second space 2. The drive device 12 includes a battery, a motor, a control device for controlling self-driving, and the like. The information processing device 14 will be described later.

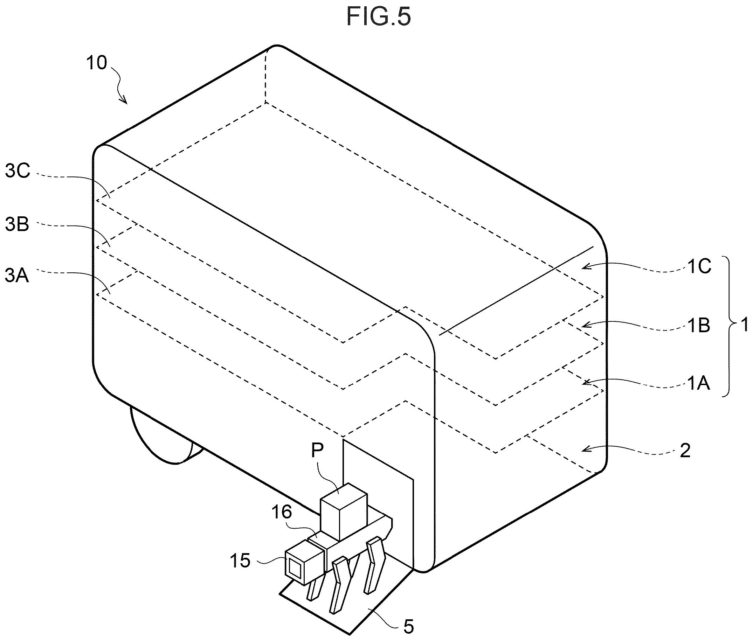

A door 5 for releasing the second space 2 to the outside is attached to one side surface of the self-driving vehicle 10 in such a manner that its lower end is pivotable. Note that the door 5 is attached to the predetermined position where the delivery robot 15 is parked. Then, as illustrated in Fig. 5, when the door 5 is opened, the upper end of the door 5 comes into contact with the ground, whereby the door 5 functions as a slope for the delivery robot 15 to enter and exit the self-driving vehicle 10.

The delivery robot 15 is a quadrupedal robot, and has a placement portion 16 for placing the package P on the back surface. When receiving the package P, the delivery robot 15 delivers the package P to the delivery destination of the received package P. Then, the delivery robot 15 automatically returns to the self-driving vehicle 10, goes up a slope formed by the door 5, and is parked at the predetermined position.

The driving of the delivery system according to the present embodiment is controlled by the information processing device 14 disposed in the second space 2.

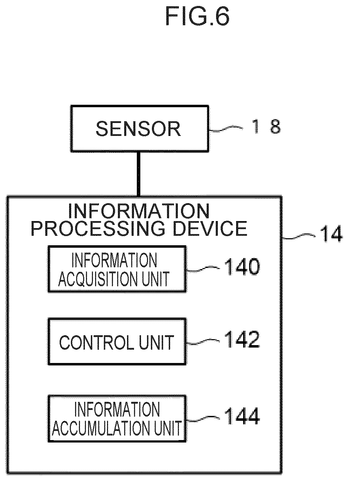

Fig. 6 is a schematic diagram of an example of an information processing device according to the present embodiment. The information processing device 14 is connected to a sensor 18 mounted on the self-driving vehicle 10.

The sensor 18 detects the position of the package P located in the first space 1 in the self-driving vehicle 10, the open/closed state of the door 5 in the second space 2, and the like. As the sensor 18, a highest-performance camera, a solid-state LiDAR, a multi-color laser coaxial displacement meter, or any one of the various other types of sensors can be adopted. Other examples of the sensor 18 include a vibration meter, a thermo camera, a hardness meter, a radar, a LiDAR, a high-pixel, telephoto, ultra-wide angle, 360-degree, high-performance camera, vision recognition, micro-sound, ultrasonic waves, vibration, infrared rays, ultraviolet rays, electromagnetic waves, temperature, humidity, spot AI weather forecasts, high-precision multi-channel GPS, low-altitude satellite information, and long-tail incident AI data, and the like.

The information processing device 14 includes an information acquisition unit 140, a control unit 142, and an information accumulation unit 144. The information acquisition unit 140 acquires the position information of the package P detected by the sensor 18.

The control unit 142 controls the operations and the like of the first bar 21 and the second bar 22 of the moving device 20 using the information acquired by the information acquisition unit 140 and artificial intelligence (AI).

For example, the control unit 142 executes each of the following processes. Before executing the following processes, the control unit 142 moves the self-driving vehicle 10 to near the delivery destination of the package P. The vicinity of the delivery destination is, for example, a place within 1 to 2 kilometers from the delivery destination.
(1) The control unit 142 drives the drive device 23 to cause the first bar 21 to roll so as to move the package P located on the floor of the lowermost tier 1A to near the opening 4A.
(2) The control unit 142 drives the drive device 24 to move the second bar 22 toward the package P, thereby pushing the package P moved to near the opening 4A toward the opening 4A to drop the package P from the opening 4A.
(3) The control unit 142 detects that the package P has dropped, and drives the drive device 23 and the drive device 24 to return the first bar 21 and the second bar 22 to the initial positions.
(4) The control unit 142 detects that the delivery robot 15 has received the package P and opens the door 5. As a result, the delivery robot 15 gets off the self-driving vehicle 10 and delivers the package P to the delivery destination.
(5) The control unit 142 detects that the delivery robot 15 has returned and closes the door 5.

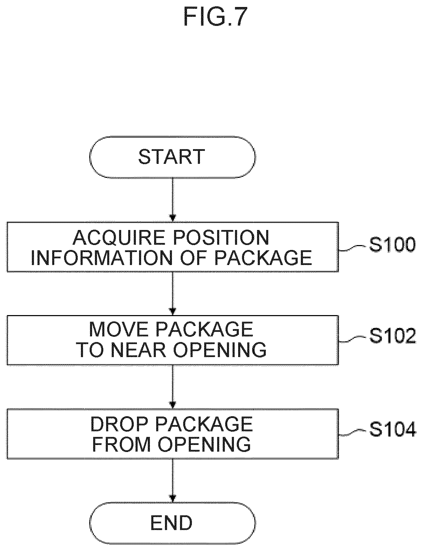

Fig. 7 is a diagram schematically illustrating an example of a processing routine executed by the information processing device. For example, in a case in which the packages P located on the floor of the lowermost tier 1A is dropped from the opening 4A to the second space 2, the information processing device 14 repeatedly executes the flowchart illustrated in Fig. 7.

In step S100, the information acquisition unit 140 acquires the position information of the package P detected by the sensor 18.

In step S102, the control unit 142 moves the package P to near the opening 4A using the first bar 21 by driving the drive device 23 using the position information of the package P acquired in step S100 and the AI.

In step S104, the control unit 142 drops the package P from the opening 4A by driving the drive device 24 to push the package P toward the opening 4A using the second bar 22.

When the dropped package P is placed on the delivery robot 15, the delivery robot 15 gets off the self-driving vehicle 10 by moving down through a slope installed with the door 5 that is being released, delivers the package P to the delivery destination, and then returns to the self-driving vehicle 10.

According to the present embodiment, the package P located on the lowermost tier 1A of the first space 1 is moved to the opening 4A by the moving device 20, dropped from the opening 4A, and placed on the delivery robot 15. Then, the delivery robot 15 delivers the package P to the delivery destination, and then returns to the self-driving vehicle 10. This makes it possible to automatically unload the package P from the vehicle, and also automatically deliver the package P. Therefore, labor costs for work can be saved.

In addition, in the delivery system of the disclosure, the door 5 is provided in the second space 2, and the door 5 functions as a slope for the delivery robot 15 to enter and exit the self-driving vehicle 10. This not only provides the self-driving vehicle 10 with a measure for crime prevention, but also enables the delivery robot 15 to easily enter and exit the self-driving vehicle 10.

### (Second Embodiment)

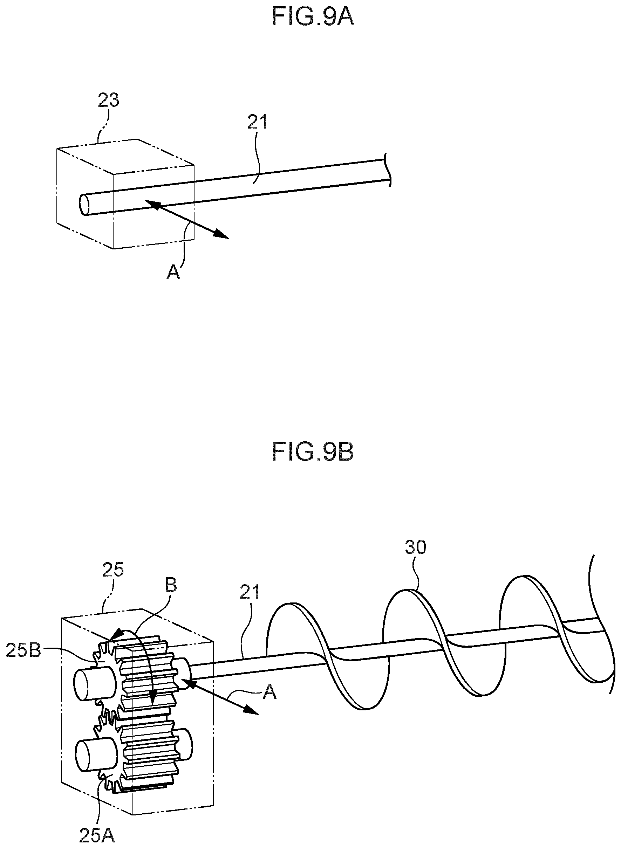

The drive device 23 indicated by a two-dot chain line in Fig. 9A is a moving device accommodated inside the walls of the tier 1A, and moves along a direction indicated by arrow A, which is a vehicle front-rear direction of the self-driving vehicle 10, under the control of the information processing device 14. The drive devices 23 are accommodated inside the walls on both sides of the self-driving vehicle 10, and the drive devices 23 move in conjunction with each other.

An end portion of the first bar 21 is inserted into the drive device 23. The end portion of the first bar 21 is not fixed to the drive device 23, and the first bar 21 is axially rotatable. As a result, as the drive device 23 moves, the first bar 21 moves, that is, "rolls" while rotating in the direction indicated by arrow A.

### (First Modification of Drive Device and First Bar)

The drive device according to the disclosure may have a configuration like a drive device 25 illustrated in Fig. 9B. Similarly to the drive device 23, the drive device 25 is a moving device accommodated on the tier 1A inside the walls of the self-driving vehicle 10, and moves in a direction indicated by arrow A. The drive device 25 is also controlled by the information processing device 14.

The drive device 25 incorporates a gear 25A. The gear 25A meshes with a gear 25B fixed to the end portion of the first bar 21. As the gear 25A rotates, the first bar 21 rotates in a direction indicated by arrow B. The "direction indicated by arrow B" is a direction of rotation around the central axis of the first bar 21. As the drive device 25 moves, the first bar 21 moves in the direction indicated by arrow A.

In this manner, with the drive device 25, the rotation of the first bar in the direction indicated by arrow B and the movement of the first bar 21 in the direction indicated by arrow A can be controlled separately. In the disclosure, the "first bar of roll type" includes a first bar in an aspect in which a rotation and a movement are separately performed.

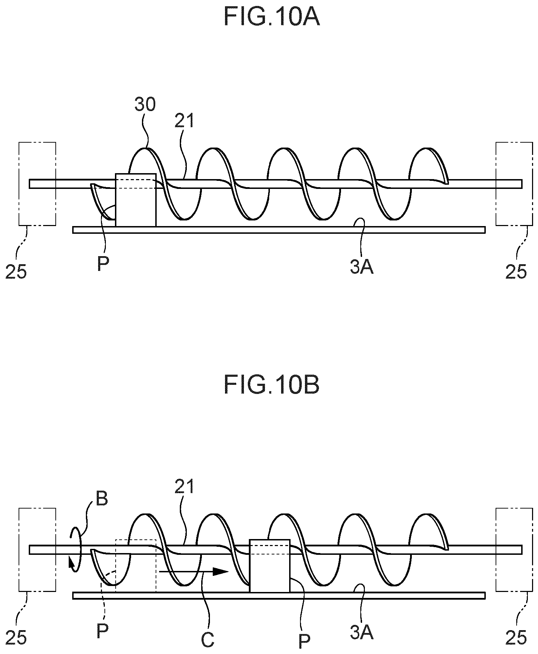

In a case in which the drive device 25 is used, it is necessary to form a spiral convex portion 30 on the first bar 21 along the central axis of the first bar 21 as illustrated in Fig. 9(B). In the first modification in which the convex portion 30 is formed on the first bar 21, as illustrated in Fig. 10A, the first bar 21 is disposed away from the floor 3A while being held by the drive device 25. On the other hand, the convex portion 30 may be disposed away from or in contact with the floor 3A.

The convex portion 30 is a member protruding in the radial direction of the first bar 21. More specifically, the convex portion 30 is a member having a spiral structure in which the protruding direction in the circumferential direction changes along the axial direction of the first bar 21.

When the first bar 21 is rotated in the direction indicated by arrow B by the drive device 25, the package P is pressed by the convex portion 30 and moves in a direction indicated by arrow C as illustrated in Fig. 10(B). The direction indicated by arrow C is a direction along the vehicle width direction of the self-driving vehicle 10. When the rotation direction of the first bar 21 is changed, the direction in which the package P moves can be changed in the vehicle width direction of the self-driving vehicle 10.

In this manner, by providing the convex portion 30 on the first bar 21, the package P can be moved to a position (a position in the vehicle width direction of the self-driving vehicle 10) where the package P can be pressed by the second bar 22 (see Fig. 3).

Thereafter, when the first bar 21 is moved in the direction indicated by arrow A by the drive device 25, the package P is pressed and moved by the first bar 21. As a result, the package P can be moved to a position (a position in the vehicle front-rear direction of the self-driving vehicle 10) where the package P can be pressed by the second bar 22 illustrated in Fig. 3.

### (Second Modification of Drive Device and First Bar)

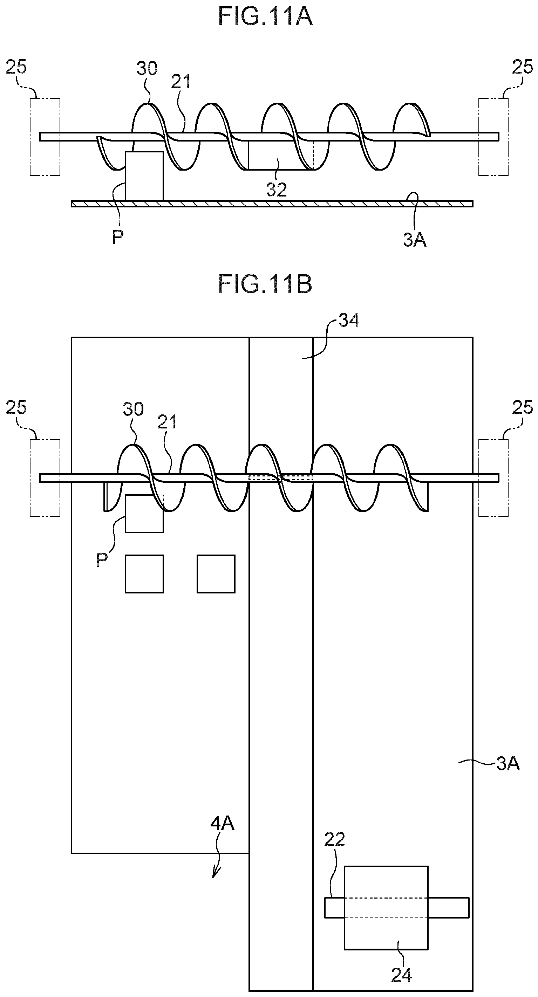

In a case in which the spiral convex portion 30 is formed on the first bar 21, a plate-like portion 32 illustrated in Fig. 11A may be further formed in a part of the convex portion 30. The plate-like portion 32 is a plate member whose in-plane direction is along the axial direction of the central axis of the first bar 21 and the radial direction of the first bar 21.

As illustrated in Fig. 11B, the plate-like portion 32 is preferably formed at a position where the package P can be pressed toward the opening 4A by the second bar 22 (a position in the vehicle width direction of the self-driving vehicle 10).

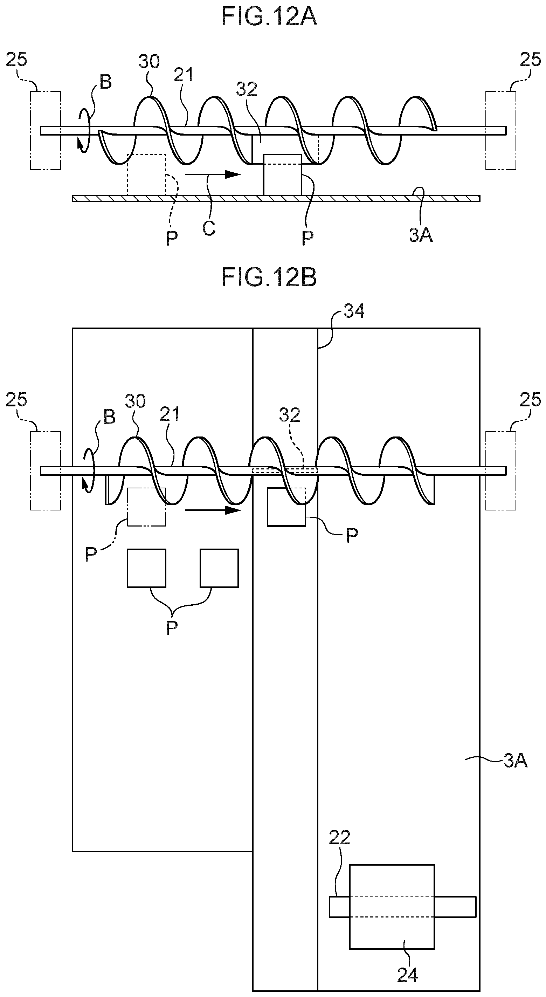

According to this configuration, as illustrated in Figs. 12A and 12B, when the first bar 21 is rotated in the direction indicated by arrow B by the drive device 25, the package P is pressed and moved by the convex portion 30 in the direction indicated by arrow C.

As a result, the package P can be moved to the front of the plate-like portion 32 (that is, the second bar 22 side as viewed from the plate-like portion 32).

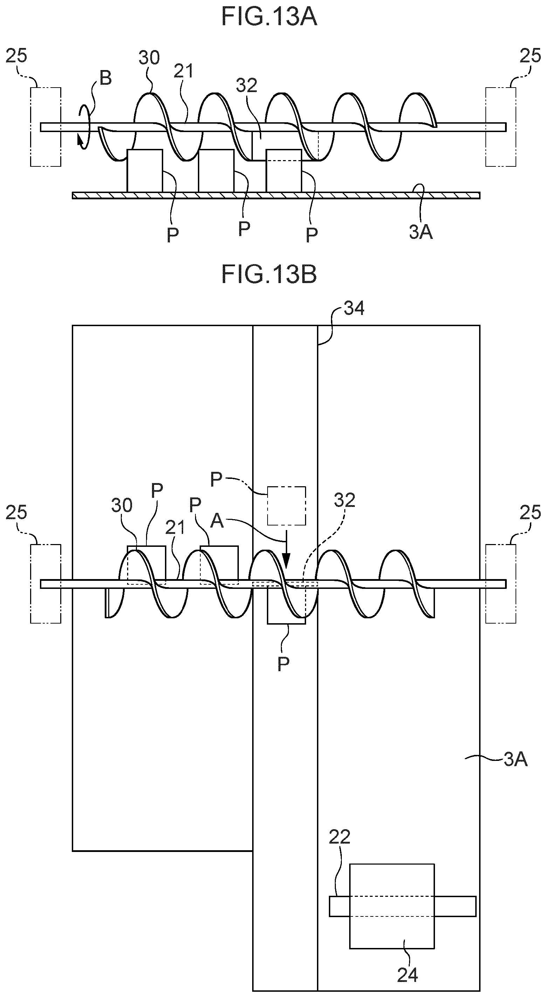

Thereafter, as illustrated in Figs. 13A and 13B, when the first bar 21 is moved in the direction indicated by arrow A by the drive device 25, the package P is pressed and moved by the plate-like portion 32. As a result, the package P can be moved to a position (a position in the vehicle front-rear direction of the self-driving vehicle 10) where the package P can be pressed by the second bar 22.

On the floor 3A, a portion through which the plate-like portion 32 passes when the first bar 21 moves may be formed to have a smaller frictional resistance with respect to the package P (for example, a cardboard box) than the other portion. In order to reduce frictional resistance, for example, a sliding plate 34 is disposed on the floor 3A.

The sliding plate 34 can be formed of a fluorine-processed panel for enhancing smoothness, an uneven panel in which rib-shaped protrusions are arranged in the vehicle front-rear direction for reducing the contact area with the package P, or the like. The panel can be formed using resin, metal, or the like.

By providing such a sliding plate 34, it is possible to suppress the output of the drive device 25 necessary for moving the package P. Note that the sliding plate 34 can also be applied to the first modification described above and the third modification to be described later.

Here, in the second modification, the package P can be pressed by the plate-like portion 32. Therefore, the first bar 21 can be disposed at a higher position as compared with that in the first modification (see Fig. 10) in which the package P is pressed by the first bar 21.

As a result, as illustrated in Figs. 13A and 13B, when the first bar 21 is moved, only a package P located at a position interfered with by the plate-like portion 32 can be moved while leaving packages P located at portions that are not interfered with by the plate-like portion 32.

By providing the convex portion 30 and the plate-like portion 32 in this manner, a package P located on the back side of the opening 4A can be unloaded prior to a package P located on the front side of the opening 4A.

### (Third Modification of Drive Device and First Bar)

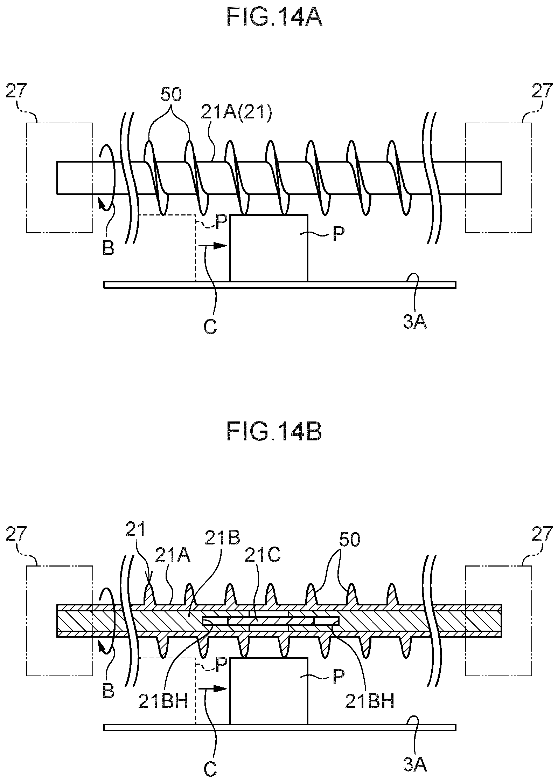

The first bar 21 may include an outer circumferential member 21A, two shaft members 21B, and a connecting member 21C illustrated in Fig. 14B, and a spiral convex portion 50 may be formed integrally with the outer circumferential member 21A.

One end of each of the two shaft members 21B is fixed to the drive device 27, and the other end of each of the two shaft members 21B is connected to the other end of the other shaft member 21B by the connecting member 21C. Both ends of the connecting member 21C are inserted into insertion holes 21BH formed in the other ends of the two shaft members 21B.

In a state where the connecting member 21C is inserted into the insertion holes 21BH, gaps are formed between the hole bottoms of the insertion holes 21BH and the end portions of the connecting member 21C.

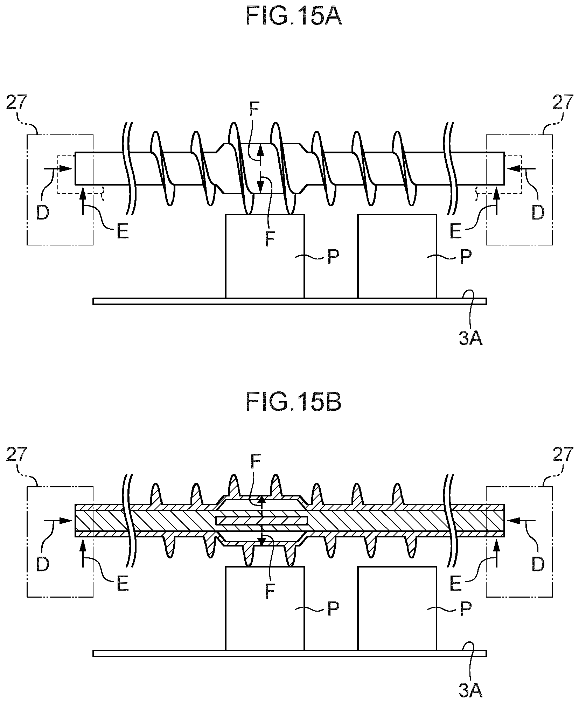

The two shaft members 21B are movable along the axial direction to approach each other as indicated by arrow D in Fig. 15B. After approaching each other, the two shaft members 21B can also be spaced apart from each other. The two shaft members 21B move under the control of the drive device 27. This changes the length of the first bar 21.

As illustrated in Figs. 14A and 14B, the outer circumferential member 21A is a cylindrical member that covers the outer circumferential surfaces of the shaft members 21B, is formed of a member having a high friction coefficient such as high-friction rubber, and is integrally formed with the convex portion 50 on the outer circumferential surfaces of the shaft members 21B.

The outer circumferential member 21A and the shaft members 21B illustrated in Fig. 14B are fixed to each other, for example, by adhesion. More specifically, in the axial directions of the shaft members 21B, the inner circumferential surface of the outer circumferential member 21A adheres to the outer circumferential surfaces of the shaft members 21B where the insertion holes 21BH are not formed. On the other hand, in the axial directions of the shaft members 21B, the inner circumferential surface of the outer circumferential member 21A does not adhere to the outer circumferential surfaces of the shaft members 21B where the insertion holes 21BH are formed. The bonding length can be appropriately adjusted.

As a result, when the two shaft members 21B are brought close to each other, as illustrated in Fig. 15B, the diameter of the portion of the outer circumferential member 21A that does not adhere to the shaft members 21B increases, and the height of the convex portion 50 increases as indicated by arrow F in Fig. 15A. The "increase in height" refers to an increase in protrusion height of the first bar 21 from the central axis.

At this time, in a case in which the package P is located below the convex portion 50 having an increased height, the convex portion 50 having an increased height presses the package P downward, and the first bar 21 moves upward as indicated by arrow E due to a reaction force received by the convex portion 50 from the package P.

The drive device 27 can detect the reaction force received by the convex portion 50 from the package P, and hold the first bar 21 at a height at which the convex portion 50 can press the package P with a predetermined pressing force.

According to this configuration, as illustrated in Figs. 14A and 14B, when the first bar 21 is rotated in the direction indicated by arrow B by the drive device 27, the package P moves in the direction indicated by arrow C along with the convex portion 50 due to the frictional force of the convex portion 50.

As a result, the package P can be moved to a position (a position in the vehicle width direction of the self-driving vehicle 10) where the package P can be pressed by the second bar 22 (see Fig. 3).

Thereafter, when the shaft members 21B are brought close to each other by the drive device 27 as indicated by arrow D, the height of the convex portion 50 increases as indicated by arrow F. Also, as indicated by arrow E, the height of the first bar 21 increases.

Then, when the first bar 21 is moved in the direction indicated by arrow A, the package P is moved along with the convex portion 50 due to the frictional force of the convex portion 50 (the convex portion 50 having an increased height) in contact with the package P. As a result, the package P can be moved to a position (a position in the vehicle front-rear direction of the self-driving vehicle 10) where the package P can be pressed by the second bar 22.

At this time, since the height of the first bar 21 increased, packages P other than the package P moved by the convex portion 50 having an increased height can be left.

In the above description, it has been described that the moving device 20 and the drive devices 23 and 24 are installed on the lowermost tier 1A of the first space 1. Similarly, it has also been described that the drive devices 25 and 27, the first bar 21 including the convex portion 30, the first bar 21 including the convex portion 30 and the plate-like portion 32, and the first bar 21 including the convex portion 50 described in the first to third modifications are installed on the lowermost tier 1A.

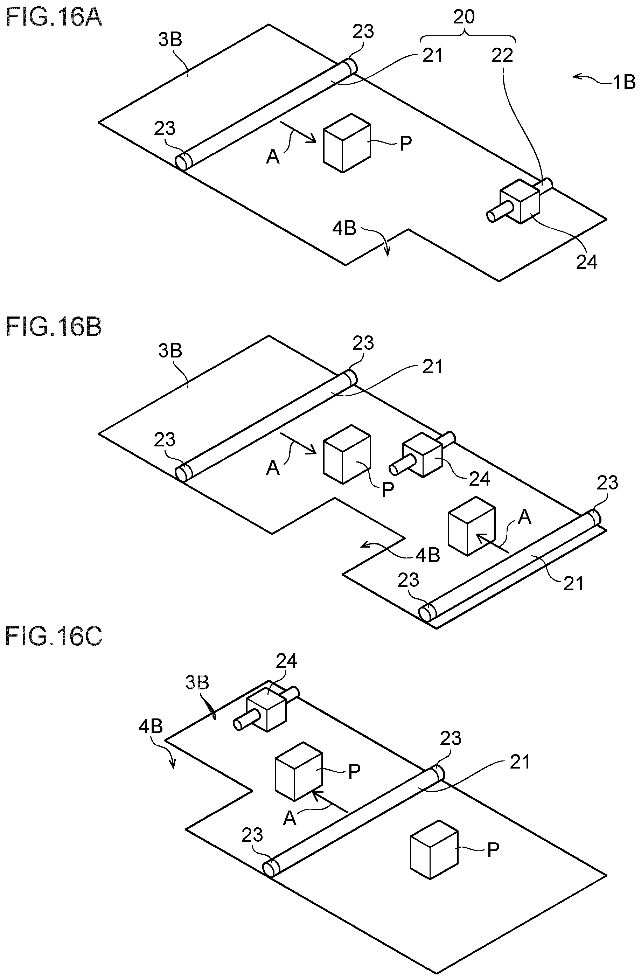

However, the moving device 20, the drive devices 23, 24, 25, and 27, the first bar 21 including the convex portion 30, the first bar 21 including the convex portion 30 and the plate-like portion 32, and the first bar 21 including the convex portion 50 can also be installed on the tier 1B and the tier 1C of the first space 1. For example, Fig. 16A illustrates a tier 1B including a moving device 20 and drive devices 23 and 24.

### (First Modification of Floor)

The floors 3B and 3C forming the tiers 1B and 1C may be configured as follows.

First, in the above-described embodiment, the openings 4B and 4C are formed at one corner of the floor 3B of the tier 1B and at one corner of the floor 3C of the tier 1C, respectively. The openings 4B and 4C are formed at positions "overlapping" the opening 4A in plan view.

However, the opening 4B is not necessarily provided at a position overlapping the opening 4A in plan view. For example, as illustrated in Fig. 16B, the opening 4B may be provided in a central portion of the floor 3B. In a case in which the opening 4B is provided in the central portion of the floor 3B, the first bars 21 and the drive devices 23 are preferably provided on both sides of the opening 4B. The "both sides" indicate the front side and the rear side in the vehicle front-rear direction of the self-driving vehicle 10.

The opening 4B may be provided on the back side of the floor 3B as illustrated in Fig. 16C. The "back side" indicates a back as viewed from the opening 4A of the tier 1A. The corner at which the opening 4B illustrated in Fig. 16C is formed is a corner that does not overlap the opening 4A.

Although not illustrated, the opening 4C formed in the floor 3C of the tier 1C can also be formed at any place similarly to the opening 4B. Furthermore, the opening 4B and the opening 4C may be formed at positions overlapping in plan view, or may be formed at different positions in plan view.

In a case in which the opening 4B and the opening 4C are formed at different positions in plan view, the package P dropped from the opening 4C can be once landed on the floor 3B and moved to the opening 4B by the first bar 21 and the second bar 22 on the tier 1B. As a result, the height at which the package P is dropped can be reduced as compared with that in a case in which the package P dropped from the opening 4C is landed on the floor 3A.

Note that the first to third modifications of the drive device 25 and the first bar 21 described above can also be applied to an embodiment in which the positions of the openings 4B and 4C are different from the position of the opening 4A in plan view.

### (Second Modification of Floor)

The floors 3B and 3C forming the tiers 1B and 1C may be configured as follows.

In the above-described embodiment, the openings 4B and 4C are formed in the floors 3B and 3C of the tiers 1B and 1C, respectively. In this modification, the openings 4B and 4C may be formed by a plurality of opening/closing doors, and the positions of the openings 4B and 4C may be variable.

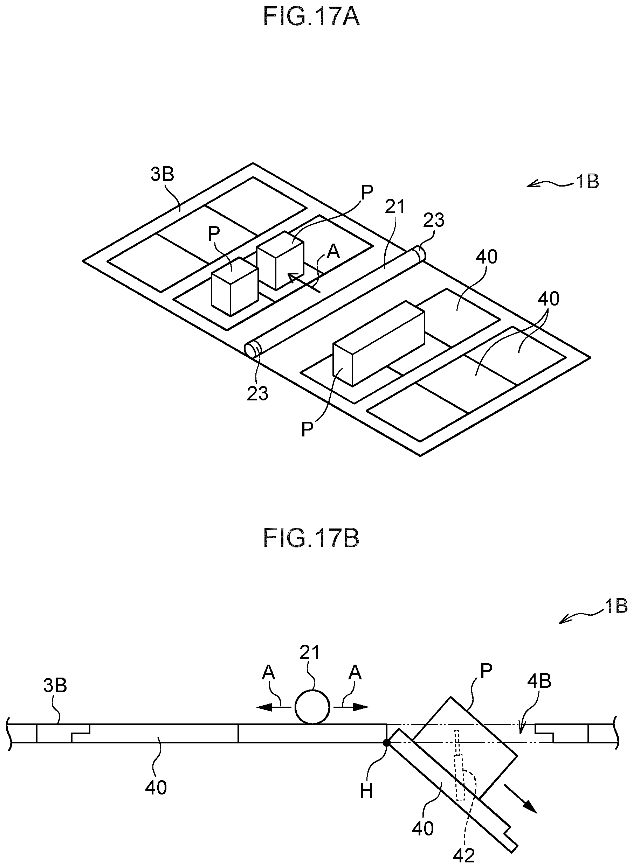

For example, Fig. 17A illustrates a state in which a plurality of opening/closing doors 40 are formed on the floor 3B of the tier 1B. The plurality of opening/closing doors 40 are provided in each of the vehicle width direction and the vehicle front-rear direction of the self-driving vehicle 10.

The opening/closing doors 40 are provided consecutively in the width direction of the floor 3B. The opening/closing doors 40 are provided over substantially the entire area (for example, 80% or more of the width dimension) in the width direction of the floor 3B.

The opening and closing of each opening/closing door 40 is controlled by the information processing device 14. Under the control of the information processing device 14, the opening/closing doors 40 are normally kept closed. In addition, under the control of the information processing device 14, only one opening/closing door 40 can be opened, or a plurality of opening/closing doors 40 can be simultaneously opened.

For example, when the opening/closing doors 40 adjacent to each other in the width direction of the floor 3B are opened, the size of the opening 4B illustrated in Fig. 17B can be increased as compared with that in a case in which one opening/closing door 40 is opened.

As illustrated in Fig. 17B, the opening/closing door 40 can function as a slope that pivots about a hinge H provided on the floor 3B to move the package P. In order to slow down the speed at which the opening/closing door 40 is opened, the opening/closing door 40 and the floor 3B may be connected to each other by a damper 42 or the like.

On the tier 1B where the opening/closing doors 40 are provided, the first bar 21 and the drive device 23 are provided, and the second bar 22 and the drive device 24 are omitted. The drive devices 25 and 27 may be provided instead of the drive device 23, and the convex portion 30, the plate-like portion 32, the convex portion 50, or the like may be appropriately provided on the first bar 21.

In this modification, the first bar 21 and the drive device 23 move the package P on the opening/closing door 40. Since the plurality of the opening/closing doors 40 are formed in the front-rear direction of the floor 3B, when the package P is dropped onto the lower tier, the distance by which the package P is moved in the front-rear direction of the floor 3B by the first bar 21 can be shortened.

In addition, since the plurality of opening/closing doors 40 are formed in the width direction of the floor 3B, even if a plurality of packages P pressed and moved by the first bar 21 are arranged in the width direction of the floor 3B, it is easy to drop only a desired package P onto the floor 3A of the lower tier.

Furthermore, since the plurality of opening/closing doors 40 are formed, the packages P located on the floor 3B can be dropped in such a manner as to avoid places where packages P are present on the floor 3A of the lower tier.

Even in a case in which the package P has a larger size than one opening/closing door 40, the package P can be dropped onto the floor 3A of the lower tier by opening a plurality of adjacent opening/closing doors 40.

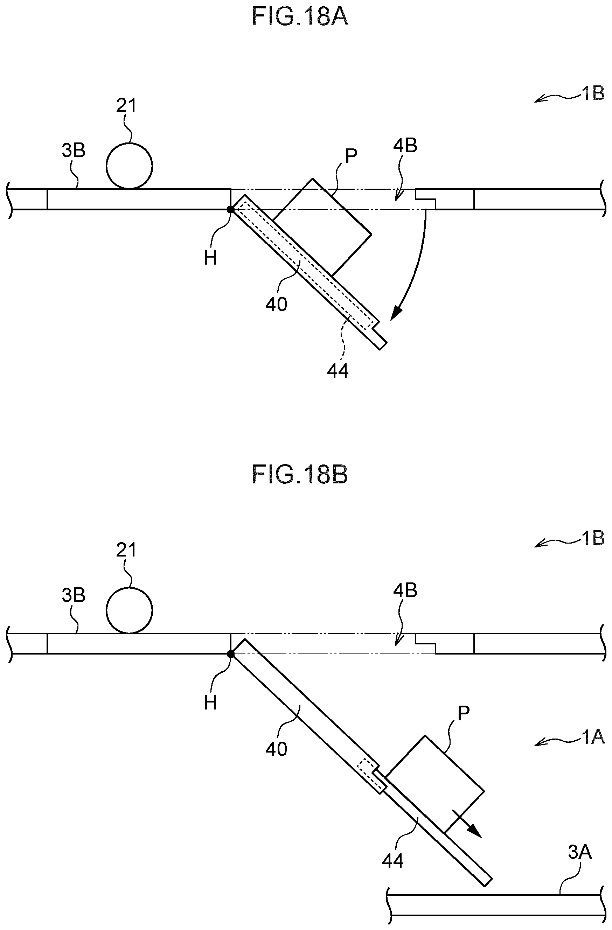

As illustrated in Figs. 18A and 18B, a plate-shaped extension member 44 extending toward the floor 3A of the lower tier may be provided in the opening/closing door 40. By providing the extension member 44, the length of the slope increases. As a result, it is easy to send the package P to the floor 3A of the lower tier.

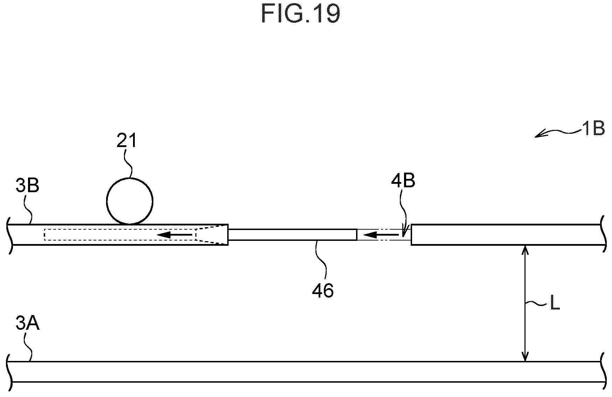

Further, the mechanism of the opening/closing door is not necessarily a rotary type opening/closing mechanism using the hinge H. For example, like an opening/closing door 46 illustrated in Fig. 19, a sliding type opening/closing mechanism that can be inserted into the floor 3B may be used. By using such a sliding type opening/closing mechanism, the rotation trajectory of the opening/closing door can be eliminated, making it easy to narrow the gap L between the floor 3B and the floor 3A of the lower tier to ensure the transportation amount of packages P.

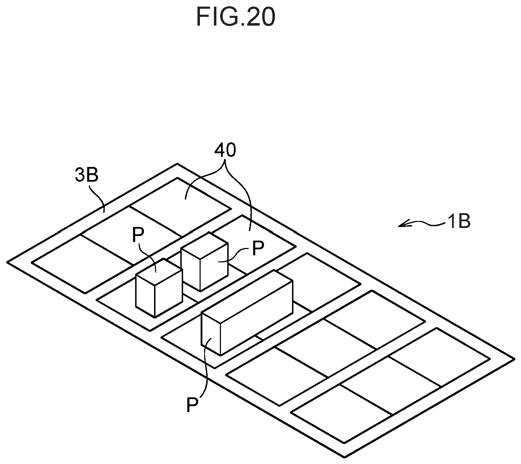

As illustrated in Fig. 20, the first bar 21 and the drive device 23 can be omitted. In this case, the plurality of opening/closing doors 40 are disposed over substantially the entire surface of the floor 3B. Alternatively, the first bar 21 and the drive device 23 can be omitted by placing all the package P in the information about the opening/closing doors 40.

### (Third Embodiment)

### (Premise and Problem)

In a case in which packages are delivered by a vehicle having a self-driving function, work of unloading the packages from the vehicle and work of delivering the packages to delivery destinations need to be performed by a human, which requires labor costs. For this reason, it is conceivable to arrange a plurality of delivery robots in the vehicle and deliver the packages from the vehicle to the delivery destinations using the delivery robots. However, if the delivery robots have left the vehicle for delivery, the delivery robots cannot be used, and thus the packages may not be efficiently delivered.

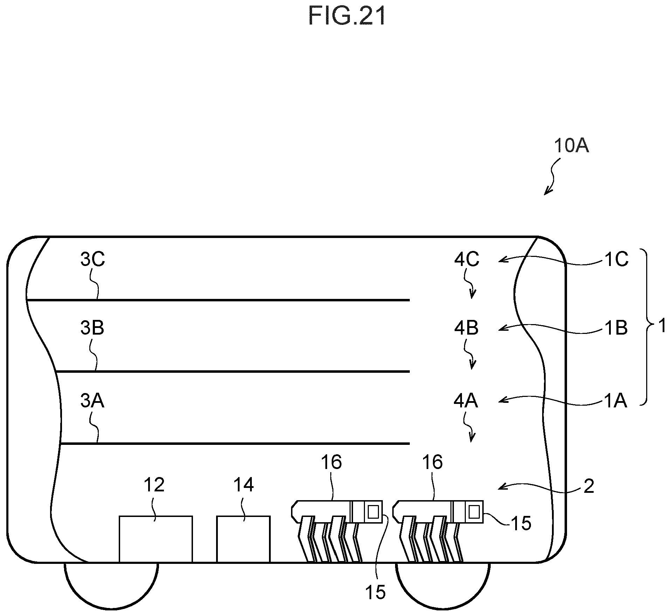

Fig. 21 is a partial cross-sectional side view of a first self-driving vehicle used in a delivery system according to the present embodiment. A first self-driving vehicle 10A includes a first space 1 having at least one tier for loading packages and a second space 2 located below the first space 1.

The first self-driving vehicle 10A has, for example, a total length of 4 m, a height of 1.8 m, and a width of 1.9 m, and a height of the second space 2 of 80 cm, but is not limited thereto.

In the second space 2, a plurality of delivery robots 15 for delivering packages P to delivery destinations are arranged. One of the plurality of delivery robots 15 is parked at a predetermined position of the second space 2. The predetermined position is a position where the package P dropped from the opening 4A can be received. In addition, a drive device 12 for driving the first self-driving vehicle 10A and an information processing device 14 are disposed in the second space 2. The drive device 12 includes a battery, a motor, a control device for controlling self-driving, and the like. The information processing device 14 will be described later.

A door 5 for releasing the second space 2 to the outside is attached to one side surface of the first self-driving vehicle 10A in such a manner that its lower end is pivotable. Note that the door 5 is attached to the predetermined position where one of the delivery robots 15 is parked. Then, as illustrated in Fig. 5, when the door 5 is opened, the upper end of the door 5 comes into contact with the ground, whereby the door 5 functions as a slope for the delivery robot 15 to enter and exit the first self-driving vehicle 10A.

The delivery robot 15 is a quadrupedal robot, and has a placement portion 16 for placing the package P on the back surface. When receiving the package P, the delivery robot 15 delivers the package P to the delivery destination of the received package P. When one delivery robot 15 gets off the first self-driving vehicle 10A to deliver the package P, another delivery robot 15 disposed in the second space 2 moves to the predetermined position and is parked at the predetermined position to remain ready to receive the package P.

The driving of the first self-driving vehicle 10A is controlled by the information processing device 14 disposed in the second space 2.

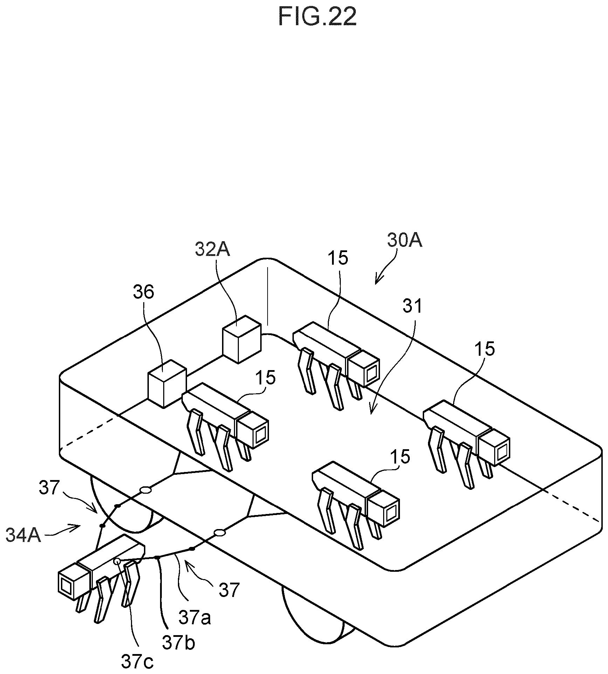

Next, a second self-driving vehicle used in the delivery system according to the present embodiment will be described. Fig. 22 is a perspective view of a second self-driving vehicle used in the delivery system according to the present embodiment. A second self-driving vehicle 30A has a space 31 in which a delivery robot 15 is placed. In Fig. 22, four delivery robots 15 are arranged in the space 31.

For example, the second self-driving vehicle 30A has a total length of 4 m, a height of 0.6 m, and a width of 1.9 m, but is not limited thereto.

In addition, a drive device 32A for driving the second self-driving vehicle 30A, a robot moving device 34A, and an information processing device 36 are disposed in the second self-driving vehicle 30A. The drive device 32A includes a battery, a motor, a control device for controlling self-driving, and the like. The information processing device 36 will be described later.

The robot moving device 34A is attached to a side of the second self-driving vehicle 30A, and is driven to collect the delivery robot 15 that has finished delivering the package P into the space 31 and to take out the delivery robot 15 from the space 31. The robot moving device 34A includes two arms 37. The proximal end of the arm 37 is fixed to the second self-driving vehicle 30A. Note that the number of arms 37 is not limited to two. In addition, the number of robot moving devices 34A is not limited to one. The robot moving devices 34A may be attached to both sides of the second self-driving vehicle 30A, or may be attached to the front and rear of the second self-driving vehicle 30A instead of or in addition to both sides of the second self-driving vehicle 30A.

The arm 37 includes a plurality of rod parts 37a and a plurality of joint parts 37b. The joint parts 37b is provided, for example, between the two rod parts 37a, enabling the two rod parts 37a to rotate relative to each other. Each joint parts 37b includes an actuator such as a motor. When the rod parts 37a are rotated relative to each other by each joint parts 37b, the arm 37 expands and contracts and can rotate by 360 degrees.

A gripping part 37c for gripping the delivery robot 15 is provided at the distal end of the arm 37. The gripping part 37c is, for example, a suction plate, and grips the delivery robot 15 by suction using a compressor (not illustrated). Note that the gripping part 37c may be a so-called robot hand.

The robot moving device 34A grips the delivery robot 15 with the gripping parts 37c provided in the two arms 37, respectively. By holding the delivery robot 15 at two points in this manner, the robot moving device 34A can stably collect the delivery robot 15 and hand over the delivery robot 15 to the first self-driving vehicle 10A.

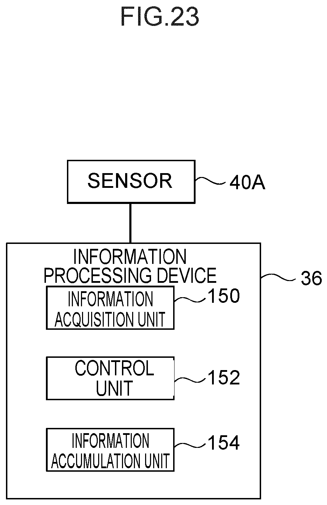

Fig. 23 is a schematic diagram of an example of an information processing device of the second self-driving vehicle 30. The information processing device 36 of the second self-driving vehicle 30A is connected to a sensor 40A mounted on the second self-driving vehicle 30A.

The sensor 40A detects the position of the delivery robot 15 at the time of collecting the delivery robot 15, the number of delivery robots 15 arranged in the adjacent first self-driving vehicle 10A, the position of the first self-driving vehicle 10A that hands over the delivery robot 15, and the like. The sensor 40A detects this information, for example, every nanosecond. As the sensor 40A, a sensor similar to the sensor 18 can be used.

The information processing device 36 includes an information acquisition unit 150, a control unit 152, and an information accumulation unit 154. The information acquisition unit 150 acquires the position information of the delivery robot 15 that has delivered the package P detected by the sensor 40A.

The control unit 152 drives the drive device 32A based on the position information of the delivery robot 15 to move the second self-driving vehicle 30A to the position of the delivery robot 15. Then, the delivery robot 15 is collected in the space 31 by driving the robot moving device 34A. At the time of collecting the delivery robot 15, the control unit 152 may stop the second self-driving vehicle 30A, or may control the drive device 32A to move the second self-driving vehicle 30A at a decreased speed to collect the delivery robot 15.

In addition, the information acquisition unit 150 acquires information on the number of delivery robots 15 arranged in the first self-driving vehicle 10A that has encountered the second self-driving vehicle 30A while the second self-driving vehicle 30A is traveling. The acquisition of the information on the number of delivery robots 15 arranged in the first self-driving vehicle 10A is performed by the sensor 40A detecting a signal indicating the number of delivery robots 15 arranged in the first self-driving vehicle 10A, which is transmitted from the first self-driving vehicle 10A.

Based on the information on the number of delivery robots 15, the control unit 152 determines whether the number of delivery robots 15 provided in the first self-driving vehicle 10A is excessive or insufficient. Whether the number of delivery robots 15 provided in the first self-driving vehicle 10 is excessive or insufficient may be determined by determining whether the number of delivery robots 15 is within a predetermined range. When the number of delivery robots 15 arranged in the first self-driving vehicle 10A is insufficient, the control unit 152 drives the robot moving device 34A to take out the delivery robot 15 from the space 31 and hand over the delivery robot 15 to the first self-driving vehicle 10A. The first self-driving vehicle 10A opens the door 5 and receives the delivery robot 15 from the second self-driving vehicle 30A.

The information accumulation unit 154 is realized by, for example, a storage medium such as a semiconductor memory element, e.g., a RAM or a flash memory. The information accumulation unit 154 stores various programs executed by the control unit 152. The information accumulation unit 154 stores the information acquired by the information acquisition unit 150.

Note that the handover of the delivery robot 15 from the second self-driving vehicle 30A to the first self-driving vehicle 10A may be performed while the first self-driving vehicle 10A and the second self-driving vehicle 30A are stopped, but is not limited thereto. The delivery robot 15 may be handed over while the first self-driving vehicle 10A and the second self-driving vehicle 30A are traveling.

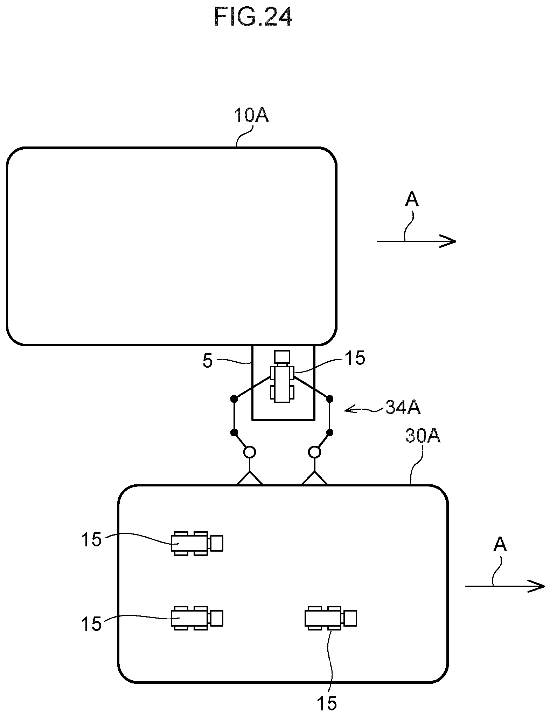

For example, as illustrated in Fig. 24, the delivery robot 15 may be handed over while causing the first self-driving vehicle 10A and the second self-driving vehicle 30A to travel in parallel at the same speed in a direction indicated by arrow A. In a case in which the door 5 of the first self-driving vehicle 10A is provided on the front side or the rear side of the first self-driving vehicle 10A, the delivery robot 15 may be handed over while causing the second self-driving vehicle 30A to follow the first self-driving vehicle 10A or causing the first self-driving vehicle 10A to follow the second self-driving vehicle 30A.

As described above, for example, the control unit 152 executes the following processes.
(1) The delivery robot 15 that has delivered the package P is collected.
(2) It is determined whether the number of delivery robots 15 arranged in the first self-driving vehicle 10A that has been encountered during traveling is excessive or insufficient.
(3) When the number of delivery robots 15 is insufficient, the delivery robot 15 is handed over.

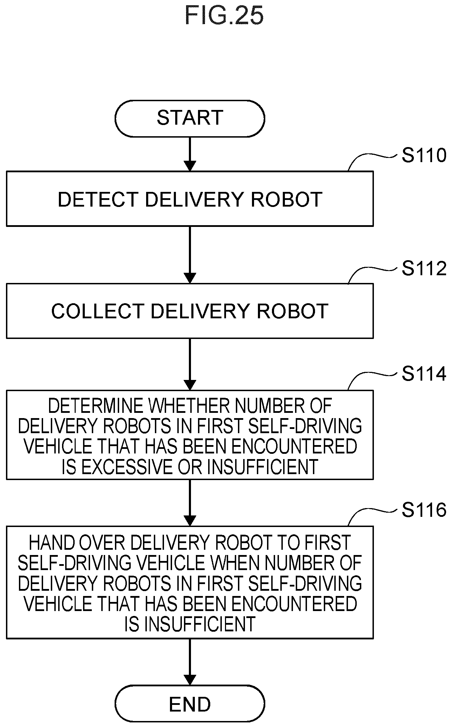

Fig. 25 is a diagram schematically illustrating an example of a processing routine executed by the information processing device of the second self-driving vehicle 30. The information processing device 36 repeatedly executes the flowchart illustrated in Fig. 25 while the second self-driving vehicle 30A is traveling.

In step S110, the information acquisition unit 150 detects a delivery robot 15 that has delivered the package P using the sensor 40A.

In step S112, the control unit 152 drives the robot moving device 34A to collect the delivery robot 15.

In step S114, it is determined whether the number of delivery robots 15 arranged in the first self-driving vehicle 10A that has been encountered during traveling is excessive or insufficient.

In step S116, when the number of delivery robots 15 in the first self-driving vehicle 10A is insufficient, a delivery robot 15 is handed over to the first self-driving vehicle 10A.

According to the present embodiment, the package P located on the lowermost tier 1A of the first space 1 is moved to the opening 4A by the moving device 20, dropped from the opening 4A, and placed on the delivery robot 15. Then, the delivery robot 15 delivers the package P to the delivery destination, and then returns to the first self-driving vehicle 10A. This makes it possible to automatically unload the package P from the vehicle, and also automatically deliver the package P. Therefore, labor costs for work can be saved.

In addition, the door 5 is provided in the second space 2, and the door 5 functions as a slope for the delivery robot 15 to enter and exit the first self-driving vehicle 10A. This not only provides the first self-driving vehicle 10A with a measure for crime prevention, but also enables the delivery robot 15 to easily enter and exit the first self-driving vehicle 10A.

In addition, since the delivery robot 15 that has delivered the package P is collected by the second self-driving vehicle 30A, it is possible to prevent the delivery robot 15 that has delivered the package P from being left unattended.

In addition, when the second self-driving vehicle 30A encounters the first self-driving vehicle 10A in which the number of delivery robots 15 arranged is insufficient while the second self-driving vehicle 10A is traveling, a delivery robot 15 is handed over from the second self-driving vehicle 30A to the first self-driving vehicle 10A. Therefore, an appropriate number of delivery robots 15 can be arranged in the first self-driving vehicle 10A, and as a result, packages P can be efficiently delivered.

By handing over the delivery robot 15 while the first self-driving vehicle 10A and the second self-driving vehicle 30A are still traveling, the delivery robot 15 can be efficiently handed over.

Note that, in the above-described embodiment, the processing when the number of delivery robots 15 arranged in the first self-driving vehicle 10A is insufficient has been described, but the number of delivery robots 15 arranged in the first self-driving vehicle 10A may be excessive. In this case, the second self-driving vehicle 30A may receive a delivery robot 15 from the first self-driving vehicle 10A. In this case as well, the delivery robot 15 may be handed over while the first self-driving vehicle 10A and the second self-driving vehicle 30A are stopped, or the delivery robot 15 may be handed over while the first self-driving vehicle 10A and the second self-driving vehicle 30A are traveling.

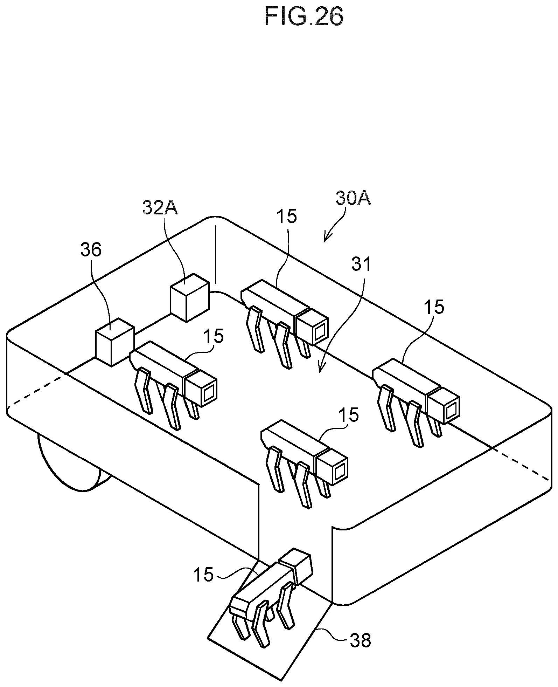

In the above-described embodiment, the robot moving device 34A takes the delivery robot 15 into and out of the space 31 of the second self-driving vehicle 30A while the delivery robot 15 is gripped by the arms 37, but the taking of the delivery robot 15 into or out of the space 31 of the second self-driving vehicle 30A is not limited thereto. As illustrated in Fig. 26, a door 38 for releasing the space 31 to the outside may be provided as a robot moving device on one side surface of the second self-driving vehicle 30A. The door 38 is attached to a side surface of the second self-driving vehicle 30A in such a manner that its lower end is pivotable. Note that the door 38 may be provided at a plurality of locations on the side surface and the front and rear surface of the second self-driving vehicle 30A.

In this case, when detecting a delivery robot that has delivered a package P, the second self-driving vehicle 30A stops near the delivery robot 15, and opens the door 38. When the door 38 is opened, the upper end of the door 38 comes into contact with the ground, whereby the door 38 functions as a slope for the delivery robot 15 to enter and exit the second self-driving vehicle 30A. Since the delivery robot 15 can self-travel, it goes up a slope formed by the door 38 and is collected into the space 31.

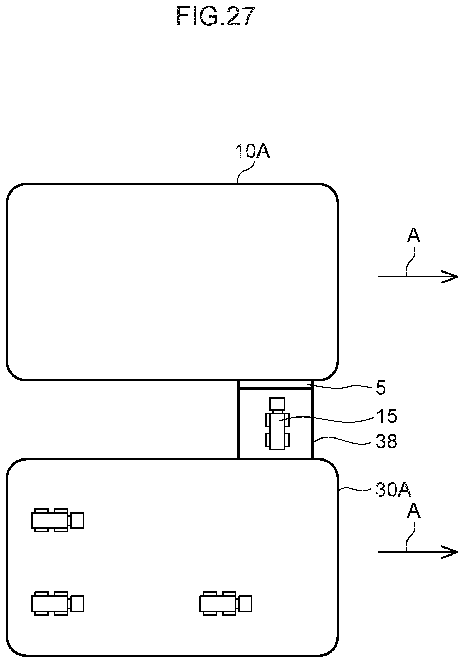

In this case, as illustrated in Fig. 27, the delivery robot 15 may be handed over to the first self-driving vehicle 10A while traveling by causing the delivery robot 15 to self-travel along a passageway formed by connecting the door 5 of the first self-driving vehicle 10A and the door 38 of the second self-driving vehicle 30A.

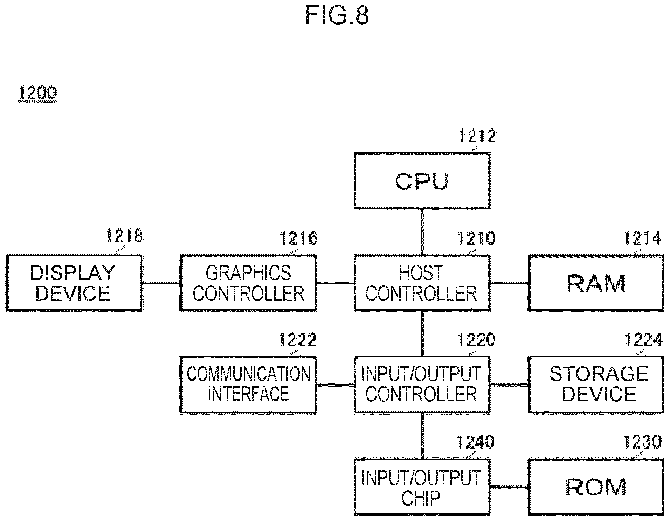

Fig. 8 schematically illustrates an example of a hardware configuration of a computer 1200 that functions as the information processing device 14. Programs installed in the computer 1200 can cause the computer 1200 to function as one or more "units" of the device according to the present embodiment, or cause the computer 1200 to execute operations associated with the device according to the present embodiment or one or more "units" of the device according to the present embodiment, and/or cause the computer 1200 to execute a process according to the present embodiment or stages of the process. Such programs may be executed by a CPU 1212 to cause the computer 1200 to execute specific operations associated with some or all of the blocks in the flowcharts and block diagrams illustrated herein.

The computer 1200 according to the present embodiment includes a CPU 1212, a RAM 1214, and a graphics controller 1216, which are connected to each other by a host controller 1210. The computer 1200 also includes a communication interface 1222, a storage device 1224, and an input/output unit such as a DVD drive or an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and an input/output unit such as a keyboard, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 in a frame buffer or the like provided in the RAM 1214 or in the RAM 1214 itself, and causes the image data to be displayed on a display device 1218.

The communication interface 1222 communicates with other electronic devices via a network. The storage device 1224 stores programs and data used by the CPU 1212 in the computer 1200. The DVD drive reads programs or data from the DVD-ROM or the like and provides the programs or data to the storage device 1224. The IC card drive reads programs and data from the IC card and/or writes programs and data to the IC card.

The ROM 1230 stores therein a boot program or the like executed by the computer 1200 when activated, and/or programs dependent on the hardware of the computer 1200. The input/output chip 1240 may also connect various input/output units to the input/output controller 1220 via a USB port, a parallel port, a serial port, a keyboard port, a mouse port, and the like.

Programs are provided by a computer-readable storage medium such as a DVD-ROM or an IC card. The programs are read from the computer-readable storage medium, installed in the storage device 1224, the RAM 1214, or the ROM 1230, which is also an example of the computer-readable storage medium, and executed by the CPU 1212. The information processing described in these programs is read by the computer 1200 and brings about cooperation between the programs and the various types of hardware resources described above. The device or method may be configured by implementing the operation or processing of information according to the use of the computer 1200.

For example, when communication is performed between the computer 1200 and an external device, the CPU 1212 may execute a communication program loaded into the RAM 1214 and instruct the communication interface 1222 to perform communication processing based on the processing described in the communication program. Under the control of the CPU 1212, the communication interface 1222 reads transmission data stored in a transmission buffer area provided in the recording medium such as the RAM 1214, the storage device 1224, the DVD-ROM, or the IC card, and transmits the read transmission data to the network, or writes reception data received from the network to a reception buffer area or the like provided on the recording medium.

In addition, the RAM 1214 may read all or necessary portions of files or databases stored in the external recording medium such as the storage device 1224, the DVD drive (DVD-ROM), or the IC card, and the CPU 1212 may execute various types of processing on data on the RAM 1214. Next, the CPU 1212 may write back the processed data to the external recording medium.

Various types of information such as various types of programs, data, tables, and databases may be stored in the recording medium and subjected to information processing. The CPU 1212 may execute various types of processing on the data read from the RAM 1214, the various types of processing including various types of operations, information processing, conditional determination, conditional branching, unconditional branching, information search/replacement, and the like, which are described throughout the disclosure and specified by an instruction sequence of a program, and writes back the results to the RAM 1214. In addition, the CPU 1212 may search for information in files, databases, or the like in the recording medium. For example, in a case in which a plurality of entries, each having an attribute value of a first attribute associated with an attribute value of a second attribute, are stored in the recording medium, the CPU 1212 may search for an entry of which the attribute value of the first attribute matches the specified condition from among the plurality of entries, and read the attribute value of the second attribute stored in the entry, thereby acquiring the attribute value of the second attribute associated with the first attribute satisfying the predetermined condition.

The programs or software modules described above may be stored in the computer-readable storage medium on the computer 1200 or near the computer 1200. Furthermore, a recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in the present embodiment may represent stages of a process in which operations are performed or "units" of a device that serves to perform operations. Specific stages and "units" may be implemented by dedicated circuits, programmable circuits provided with computer-readable instructions stored on the computer-readable storage medium, and/or processors provided with computer-readable instructions stored on the computer-readable storage medium. The dedicated circuits may include digital and/or analog hardware circuits, and may include integrated circuits (ICs) and/or discrete circuits. The programmable circuits may include reconfigurable hardware circuits including a logical AND, a logical OR, a logical XOR, a logical NAND, a logical NOR, and other logical operations, flip-flops, registers, and memory elements, such as field programmable gate arrays (FPGAs) and programmable logic arrays (PLAs).

The computer-readable storage medium may include any type of tangible device capable of storing instructions to be executed by a suitable device. As a result, the computer-readable storage medium having instructions stored thereon includes a product having instructions that may be executed to create a means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instructions may include assembler instructions, instruction-set-architecture (ISA) instructions, machine instructions, machine dependent instructions, microcode, firmware instructions, state-setting data, or either source code or object code written in any combination of one or more programming languages including object-oriented programming languages such as Smalltalk (registered trademark), JAVA (registered trademark), and C++, and conventional procedural programming languages such as a "C" programming language or similar programming languages.

The computer-readable instructions may be provided for a processor or a programmable circuit of a general purpose computer, a special purpose computer, or another programmable data processing device, either locally or through a local area network (LAN) or a wide area network (WAN) such as the Internet, such that the processor or programmable circuit of the general purpose computer, the special purpose computer, or another programmable data processing device executes the computer-readable instructions to create a means for performing the operations specified in the flowcharts or block diagrams. Examples of the processor include a computer processor, a processing unit, a microprocessor, a digital signal processor, a controller, a microcontroller, and the like.

While the disclosure has been described using the embodiments, the technical scope of the disclosure is not limited to the above-described embodiments. It is apparent to those skilled in the art that various modifications or improvements can be made to the above-described embodiments. It is also apparent from the claims that modes to which such modifications or improvements are added can also fall within the technical scope of the disclosure.

It should be noted that the operations, procedures, steps, and stages in each process performed in the device, system, program, and method shown in the claims, the specification, and the drawings may be implemented in any order unless the order is not specifically defined by using term "prior to", "before", or the like, and unless the output of previous processing is used in later processing. Even if the operation flow in the claims, the specification, and the drawings is described using the terms "first", "next", and the like for convenience, this does not mean that it is essential to perform the operation flow in this order.

While the disclosure has been described using the embodiments, the technical scope of the disclosure is not limited to the above-described embodiments. It is apparent to those skilled in the art that various modifications or improvements can be made to the above-described embodiments. It is also apparent from the claims that modes to which such modifications or improvements are added can also fall within the technical scope of the disclosure.

It should be noted that the operations, procedures, steps, and stages in each process performed in the device, system, program, and method shown in the claims, the specification, and the drawings may be implemented in any order unless the order is not specifically defined by using term "prior to", "before", or the like, and unless the output of previous processing is used in later processing. Even if the operation flow in the claims, the specification, and the drawings is described using the terms "first", "next", and the like for convenience, this does not mean that it is essential to perform the operation flow in this order.

Note that, regarding the above description, the following supplementary notes are further disclosed.

### (Supplementary Note 1)

A delivery system including:
a self-driving vehicle including a first space and a second space located below the first space, the first space having at least one tier on which packages are loaded with an opening being formed in a part of at least a lowermost tier;
a delivery robot for delivering a package to a delivery destination;
an information processing device; and
a moving device installed on the lowermost tier of the first space to move the package to the opening,
in which the delivery robot is parked at a predetermined position where the package dropping from the lowermost tier is receivable below the opening in the second space, and
the information processing device controls the moving device to move the package to the opening to drop the package from the opening so that the delivery robot receives the dropped package.

### (Supplementary Note 2)

The delivery system according to supplementary note 1, in which the self-driving vehicle includes a door for releasing the second space to the outside, a lower end of the door being pivotably attached to the self-driving vehicle, and the door functions as a slope for the delivery robot to enter and exit the self-driving vehicle when the door is opened.

### (Supplementary Note 3)

The delivery system according to supplementary note 1 or 2, in which the delivery robot delivers the package, and returns to the predetermined position of the second space after delivering the package.

### (Supplementary Note 4)

The delivery system according to supplementary note 1 or 2, in which the moving device includes:
a first bar of roll type that moves a package on a floor of the lowermost tier to near the opening; and
a second bar that pushes the package moved to near the opening toward the opening to drop the package from the opening to the second space.

### (Supplementary Note 5)

The delivery system according to supplementary note 1 or 2, in which a drive device of the self-driving vehicle is installed in the second space.

### (Supplementary Note 6)

The delivery system according to supplementary note 4, in which the first bar is rotatable about a central axis of the first bar as a rotation axis, and a spiral convex portion is formed along the central axis.

### (Supplementary Note 7)

The delivery system according to supplementary note 6, in which a plate-like portion whose in-plane direction is along an axial direction and a radial direction of the central axis is formed in a part of the convex portion.

### (Supplementary Note 8)

The delivery system according to supplementary note 6, in which the convex portion has a height that partially increases.

### (Supplementary Note 9)

The delivery system according to supplementary note 7, in which a portion of a floor surface of the first space through which the plate-like portion passes when the first bar rolls has a smaller frictional resistance with respect to the package than the other portion.

### (Supplementary Note 10)

A delivery system including:
a self-driving vehicle including a first space and a second space located below the first space, the first space having at least two tiers on which packages are loaded with an opening being formed in a part of a floor of at least a lowermost tier, and a plurality of opening/closing doors being formed on a floor of a tier other than the lowermost tier;
a delivery robot for delivering a package to a delivery destination;
an information processing device; and
a first moving device installed on the lowermost tier of the first space to move the package to the opening,
in which the delivery robot is parked at a predetermined position where the package dropping from the lowermost tier is receivable below the opening in the second space, and
the information processing device controls each of the opening/closing doors and the first moving device to open the opening/closing door to drop the package from the opening/closing door and move the package to the opening to drop the package from the opening, so that the delivery robot receives the dropped package.

### (Supplementary Note 11)

The delivery system according to supplementary note 10, further including a second moving device installed on a tier other than the lowermost tier of the first space to move the package to above the opening/closing door,
in which the information processing device further controls the second moving device.

### (Supplementary Note 12)

The delivery system according to supplementary note 11, in which the first moving device includes:
a first bar of roll type that moves a package on the floor of the lowermost tier to near the opening; and
a second bar that pushes the package moved to near the opening toward the opening to drop the package from the opening to the second space,
the second moving device is a first bar of roll type that moves a package on a floor of a tier other than the lowermost tier to above the opening/closing door, and
the opening/closing door functions as a slope that pivots about a hinge to slide the package.

### (Supplementary Note 13)

A delivery system including:
a plurality of delivery robots for delivering packages to delivery destinations;
a first self-driving vehicle in which one or more of the delivery robots are arranged, the first self-driving vehicle moving to near delivery destinations of packages so that the delivery robots on which the packages are loaded get off the first self-driving vehicle near of the delivery destinations; and
a second self-driving vehicle including a space for placing delivery robots, a robot moving device for taking in and out the delivery robots to and from the space, a drive device, and an information processing device,
in which the information processing device controls the robot moving device and the drive device to collect a delivery robot that has delivered a package into the space, and take out a delivery robot from the space and hand over the delivery robot to the first self-driving vehicle when the second self-driving vehicle encounters the first self-driving vehicle in which an insufficient number of delivery robots are arranged while traveling.

### (Supplementary Note 14)

The delivery system according to supplementary note 13, in which the information processing device controls the robot moving device and the drive device to take out the delivery robot from the space and hand over the delivery robot to the first self-driving vehicle while the first self-driving vehicle and the second self-driving vehicle are traveling.

### (Supplementary Note 15)

The delivery system according to supplementary note 13, in which the information processing device controls the robot moving device and the drive device such that the second self-driving vehicle receives a delivery robot from the first self-driving vehicle when the second self-driving vehicle encounters the first self-driving vehicle in which an excessive number of delivery robots are arranged while traveling.

### (Supplementary Note 16)

The delivery system according to supplementary note 15, in which the information processing device controls the robot moving device and the drive device such that the second self-driving vehicle receives the delivery robot from the first self-driving vehicle while the second self-driving vehicle is traveling.

### (Supplementary Note 17)

A program for causing a computer to function as the information processing device of the delivery system according to any one of supplementary notes 1 to 16.

The disclosure of Japanese Patent Application No. 2022-166913 filed on October 18, 2022, the disclosure of Japanese Patent Application No. 2022-184365 filed on November 17, 2022, the disclosure of Japanese Patent Application No. 2022-184366 filed on November 17, 2022, and the disclosure of Japanese Patent Application No. 2022-186682 filed on November 22, 2022 are incorporated herein by reference in their entirety.

### Description of Reference Numerals

1 First space
2 Second space
4A, 4B, 4C Opening
5, 38 Door
10 Self-driving vehicle
10A First self-driving vehicle
30A Second self-driving vehicle
12, 32A Drive device
14, 36 Information processing device
15 Delivery robot
18, 40A Sensor
20 Moving device
21 First bar
22 Second bar
23, 24, 25, 27, 31 Drive device
30, 70 Convex portion
31 Space
32 Plate-like portion
34 Robot moving device
37 Arm
140, 150 Information acquisition unit
142, 152 Control unit
144, 154 Information accumulation unit
1200 Computer
1210 Host controller
1212 CPU
1214 RAM
1216 Graphics controller
1218 Display device
1220 Input/output controller
1222 Communication interface
1224 Storage device
1230 ROM
1240 Input/output chip

## Claims

1. A delivery system comprising:
a self-driving vehicle including a first space and a second space located below the first space, the first space having at least one tier on which packages are loaded with an opening being formed in a part of at least a lowermost tier;
a delivery robot for delivering a package to a delivery destination;
an information processing device; and
a moving device installed on the lowermost tier of the first space to move the package to the opening,
wherein the delivery robot is parked at a predetermined position where the package dropping from the lowermost tier is receivable below the opening in the second space, and
the information processing device controls the moving device to move the package to the opening to drop the package from the opening so that the delivery robot receives the dropped package.

2. The delivery system according to claim 1, wherein the self-driving vehicle includes a door for releasing the second space to the outside, a lower end of the door being pivotably attached to the self-driving vehicle, and the door functions as a slope for the delivery robot to enter and exit the self-driving vehicle when the door is opened.

3. The delivery system according to claim 1 or 2, wherein the delivery robot delivers the package, and returns to the predetermined position of the second space after delivering the package.

4. The delivery system according to claim 1 or 2, wherein the moving device includes:
a first bar of roll type that moves a package on a floor of the lowermost tier to near the opening; and
a second bar that pushes the package moved to near the opening toward the opening to drop the package from the opening to the second space.

5. The delivery system according to claim 1 or 2, wherein a drive device of the self-driving vehicle is installed in the second space.

6. The delivery system according to claim 4, wherein the first bar is rotatable about a central axis of the first bar as a rotation axis, and a spiral convex portion is formed along the central axis.

7. The delivery system according to claim 6, wherein a plate-like portion whose in-plane direction is along an axial direction and a radial direction of the central axis is formed in a part of the convex portion.

8. The delivery system according to claim 6, wherein the convex portion has a height that partially increases.

9. The delivery system according to claim 7, wherein a portion of a floor surface of the first space through which the plate-like portion passes when the first bar rolls has a smaller frictional resistance with respect to the package than the other portion.

10. A delivery system comprising:
a self-driving vehicle including a first space and a second space located below the first space, the first space having at least two tiers on which packages are loaded with an opening being formed in a part of a floor of at least a lowermost tier, and a plurality of opening/closing doors being formed on a floor of a tier other than the lowermost tier;
a delivery robot for delivering a package to a delivery destination;
an information processing device; and
a first moving device installed on the lowermost tier of the first space to move the package to the opening,
wherein the delivery robot is parked at a predetermined position where the package dropping from the lowermost tier is receivable below the opening in the second space, and
the information processing device controls each of the opening/closing doors and the first moving device to open the opening/closing door to drop the package from the opening/closing door and move the package to the opening to drop the package from the opening, so that the delivery robot receives the dropped package.

11. The delivery system according to claim 10, further comprising a second moving device installed on a tier other than the lowermost tier of the first space to move the package to above the opening/closing door,
wherein the information processing device further controls the second moving device.

12. The delivery system according to claim 11, wherein the first moving device includes:
a first bar of roll type that moves a package on the floor of the lowermost tier to near the opening; and
a second bar that pushes the package moved to near the opening toward the opening to drop the package from the opening to the second space,
the second moving device is a first bar of roll type that moves a package on a floor of a tier other than the lowermost tier to above the opening/closing door, and
the opening/closing door functions as a slope that pivots about a hinge to slide the package.

13. A delivery system comprising:
a plurality of delivery robots for delivering packages to delivery destinations;
a first self-driving vehicle in which one or more of the delivery robots are arranged, the first self-driving vehicle moving to near delivery destinations of packages so that the delivery robots on which the packages are loaded get off the first self-driving vehicle near the delivery destinations; and
a second self-driving vehicle including a space for placing delivery robots, a robot moving device for taking in and out the delivery robots to and from the space, a drive device, and an information processing device,
wherein the information processing device controls the robot moving device and the drive device to collect a delivery robot that has delivered a package into the space, and take out a delivery robot from the space and hand over the delivery robot to the first self-driving vehicle when the second self-driving vehicle encounters the first self-driving vehicle in which an insufficient number of delivery robots are arranged while traveling.

14. The delivery system according to claim 13, wherein the information processing device controls the robot moving device and the drive device to take out the delivery robot from the space and hand over the delivery robot to the first self-driving vehicle while the first self-driving vehicle and the second self-driving vehicle are traveling.

15. The delivery system according to claim 13, wherein the information processing device controls the robot moving device and the drive device such that the second self-driving vehicle receives a delivery robot from the first self-driving vehicle when the second self-driving vehicle encounters the first self-driving vehicle in which an excessive number of delivery robots are arranged while traveling.

16. The delivery system according to claim 15, wherein the information processing device controls the robot moving device and the drive device such that the second self-driving vehicle receives the delivery robot from the first self-driving vehicle while the second self-driving vehicle is traveling.

17. A program for causing a computer to function as the information processing device of the delivery system according to claim 1.
